# EUROPEAN PATENT APPLICATION

(11) **EP 4 645 579 A1**
(43) Date of publication of application: **05.11.2025**
(21) Application number: 23936352.6
(22) Date of filing: 25.09.2023
(51) Int. Cl.: H01M 50/533, H01M 50/538, H01M 50/54, H01M 50/528, H01M 50/531

(54) **BATTERY CELL, BATTERY, AND ELECTRIC DEVICE**

(30) Priority: 11.05.2023 CN 202321139017 U
(71) Applicant: Contemporary Amperex Technology Co., Limited, Ningde, Fujian 352100 (CN)
(72) Inventor: LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/121166
(87) International publication number: WO 2024/230046

(57) **Abstract**

A battery cell, a battery, and an electric device, relating to the technical field of batteries. The battery cell comprises a casing assembly and a core assembly; the casing assembly comprises a casing and a first pole arranged on the casing; the core assembly is accommodated in the casing and comprises conductive parts electrically connected to the first pole, and each conductive part comprises a plurality of tabs which are stacked, and gathered and connected; a plurality of conductive parts are electrically connected to the first pole, the first pole is provided with a plurality of through holes, and at least one conductive part respectively passes through each through hole.

## Description

### CROSS-REFERENCE TO RELATED APPLICATION

The present application is presented based on Chinese Patent Application No. 202321139017.6 filed on May 11, 2023, and claims the priority to the Chinese Patent Application described above, the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, batteries, as the power source of electric vehicles, play an irreplaceable and important role. Typically, a battery includes a plurality of battery cells. However, it is difficult to increase the energy density of the current battery cells, resulting in difficulty in increasing the driving range of vehicles.

### SUMMARY

Embodiments of the present application provide a battery cell, a battery, and an electric device, which are conducive to improving the energy density of battery cells.

In a first aspect, the embodiments of the present application provide a battery cell. The battery cell includes: a housing assembly and a battery cell assembly, where the housing assembly includes a housing and a first post terminal disposed on the housing, the battery cell assembly is received in the housing and includes conductive parts electrically connected to the first post terminal, each of the conductive parts includes a plurality of tab plates that are stacked and connected in a gathering manner, the first post terminal is electrically connected to a plurality of conductive parts, a plurality of perforations are formed on the first post terminal, and at least one of the conductive parts is provided in each of the perforations in a penetrating manner, separately.

In the above technical solution, since the first post terminal is electrically connected to a plurality of conductive parts, thereby illustrating a plurality of conductive parts of the same polarity exist in the battery cell, and since each conductive part includes a plurality of tab plates that are stacked and connected in a gathering manner, the number of tab plates included in each conductive part can be reduced, and the gathering height of the plurality of tab plates in each conductive part can be reduced, thereby reducing the occupied size of each conductive part in the housing in a tab extension direction. When the size of the housing is fixed, the space that can be occupied by the active substance-coated part in the tab extension direction can be increased, which is conducive to increasing the energy density of the battery cell. In addition, the first post terminal is electrically connected to the plurality of conductive parts, the plurality of perforations are formed on the first post terminal, and at least one conductive part is provided in each perforation in a penetrating manner, separately, such that the conductive parts electrically connected to the first post terminal can all be at least partially received in the first post terminal to occupy the space of the first post terminal, thereby further reducing the space occupied by the conductive parts in the housing. Moreover, compared with a solution where all the conductive parts electrically connected to the first post terminal pass through a single perforation, the present application allows to reduce the size of each perforation to mitigate the adverse effect of a large perforation size on the structural strength of the first post terminal. In addition, the plurality of perforations allow the conductive part to flexibly select the perforation. For example, when the plurality of perforations are at different distances from the conductive part, the conductive part can select to extend through a close perforation, which is conducive to reducing the extension length of the conductive part, and further reducing the space occupied by the conductive part in the housing. As another example, the conductive part can select to extend through a perforation in which only a few conductive parts are provided in a penetrating manner, such that the assembly is facilitated, the problem of a large size of some perforation can be mitigated, and the structural strength of the first post terminal can be improved.

In some embodiments, the battery cell assembly includes at least one electrode assembly, each of the at least one electrode assembly includes the conductive parts, and the perforation is formed on the first post terminal corresponding to a position of each of the at least one electrode assembly, separately.

In the above technical solution, the conductive part extending from the electrode assembly can pass through the perforation formed corresponding to the electrode assembly, such that the extension length of the conductive part in the housing can be well reduced, and the space occupied by the conductive part in the housing can be reduced, which is conducive to increasing the energy density of the battery cell. Alternatively, some conductive parts may select to pass through the perforations formed corresponding to adjacent electrode assemblies as needed, thereby improving the flexibility of manufacturing.

In some embodiments, the electrode assembly includes an active substance-coated part, the conductive part includes a gathering part and a connecting part, the gathering part is formed by gathering the plurality of tab plates, the connecting part is formed by gathering and connecting the plurality of tab plates, the connecting part is configured to be electrically connected to the first post terminal, the gathering part connects the connecting part and the active substance-coated part, and a connection position of the gathering part and the connecting part is a connection base part; and the perforation is formed on the first post terminal corresponding to a position of at least one connection base part in each electrode assembly.

In the above technical solution, at least one conductive part can pass through the perforation corresponding to the connection base part thereof, such that the extension length of the connecting part in the conductive part in the housing can be reduced, and the space occupied by the conductive part in the housing can be reduced, which is conducive to increasing the energy density of the battery cell.

In some embodiments, the perforation is formed on the first post terminal corresponding to a middle region in a thickness direction of each electrode assembly, separately.

In the above technical solution, the perforation is centered or nearly centered relative to the electrode assembly, such that the conductive parts on the electrode assembly can be proximal to the centrally formed perforation regardless of the positions from which the conductive parts extend and the number of the conductive parts, such that the conductive parts do not extend very much before passing through the perforation, and the space occupied by the conductive parts in the housing can be well reduced.

In some embodiments, the electrode assembly includes the active substance-coated part, the conductive part includes the gathering part and the connecting part, the gathering part is formed by gathering the plurality of tab plates, the connecting part is formed by gathering and connecting the plurality of tab plates, the connecting part is configured to be electrically connected to the first post terminal, the gathering part connects the connecting part and the active substance-coated part, and the connection position of the gathering part and the connecting part is the connection base part; and at least one connection base part in the electrode assembly corresponds to the middle region in the thickness direction of the electrode assembly.

In the above technical solution, the tab plates of at least one conductive part in the electrode assembly are gathered centrally or nearly centrally, such that the gathering height of the conductive part can be reduced, so as to reduce the occupied size of the conductive part in the housing in the tab extension direction, which is conducive to increasing the energy density of the battery cell. In addition, the distance between the centrally gathered conductive part and each perforation corresponding to the respective electrode assembly can be short, such that the conductive part does not extend very much before passing through the perforation, and the space occupied by each conductive part in the housing can be well reduced.

In some embodiments, the battery cell assembly includes at least one combination, each of the at least one combination includes two electrode assemblies, each of the electrode assemblies in each of the at least one combination includes a plurality of conductive parts of the same polarity, separately, and at least two adjacently arranged conductive parts of the same polarity belonging to different ones of the electrode assemblies in each of the at least one combination are connected to each other.

In the above technical solution, at least two adjacently arranged conductive parts of the same polarity belonging to different electrode assemblies in each combination are connected to each other, such that both the number and the gathering height of the conductive parts can be considered, thereby avoiding a large number of perforations, ensuring the structural strength of the first post terminal, and reducing the space in the housing occupied by the conductive parts in the tab extension direction.

In some embodiments, the battery cell assembly includes at least one electrode assembly, each of the at least one electrode assembly includes at least one conductive part, the electrode assembly includes the active substance-coated part, the conductive part includes the gathering part and the connecting part, the gathering part is formed by gathering the plurality of tab plates, the connecting part is formed by gathering and connecting the plurality of tab plates, the connecting part is configured to be electrically connected to the first post terminal, the gathering part connects the connecting part and the active substance-coated part, the connection position of the gathering part and the connecting part is the connection base part, and the conductive part is provided in a perforation closest to a corresponding connection base part in a penetrating manner.

In the above technical solution, each conductive part is separately provided in the perforation closest to the connection base part thereof in a penetrating manner, such that the conductive part selects to extend through a close perforation, which is conducive to reducing the extension length of the conductive part in the housing before the conductive part passes through the perforation, and reducing the space occupied by the conductive part in the housing, thereby increasing the energy density of the battery cell. In addition, it is conducive to reducing the redundancy of the conductive part in the housing, effectively reducing the risk of short circuit between the redundancy of the conductive part in the housing and the active substance-coated part, and improving the reliability of the battery cell.

In some embodiments, the perforation is formed on the first post terminal corresponding to a position of the connection base part of each conductive part, separately.

In the above technical solution, each conductive part can separately pass through the perforation corresponding to the connection base part thereof, such that the extension length of the connecting part of each conductive part in the housing can be reduced, and the space occupied by each conductive part in the housing can be reduced, which is conducive to further increasing the energy density of the battery cell. In addition, it is conducive to reducing the redundancy of each conductive part in the housing, reducing the risk of short circuit between the redundancy of the conductive part in the housing and the active substance-coated part more effectively, and improving the reliability of the battery cell.

In some embodiments, the perforation is an elongated hole, the conductive part includes a connecting part provided in the perforation in a penetrating manner, the connecting part is sheet-shaped, a length direction of a part of the connecting part located in the perforation is consistent with a length direction of the perforation, and a width direction of the perforation is consistent with a thickness direction of the connecting part.

In the above technical solution, the perforation is provided in an elongated shape which is roughly matched with the shape of the connecting part of the conductive part, such that the connecting part of the conductive part can easily pass through the perforation, and with the conductive part passing through the perforation, less space is left in the perforation, which is conducive to reducing the size of the perforation, facilitating the subsequent sealing of the perforation, and improving the structural strength of the first post terminal.

In some embodiments, the plurality of perforations on the first post terminal are spaced apart in a direction that is different from the length direction of the perforations.

In the above technical solution, since the plurality of perforations on the first post terminal can be spaced apart in a direction intersecting the length direction of the perforations, the space in the first post terminal occupied by the plurality of perforations in the length direction of the perforations can be reduced, which is conducive to reducing the size of the first post terminal in the length direction of the perforations.

In some embodiments, the conductive part is formed by the plurality of tab plates, and the tab plates are welded to the first post terminal; or the conductive part further includes an adapting piece, and the tab plates are connected to the first post terminal through the adapting piece.

In the above technical solution, when the conductive part is formed by the plurality of tab plates and the tab plates are welded to the first post terminal, the structure and processing of the conductive part can be simplified. When the conductive part further includes the adapting piece and the tab plates are connected to the first post terminal through the adapting piece, the adapting piece can be welded to the first post terminal at a part avoiding the connection to the tab plates, such that the adapting piece can be firmly welded to the first post terminal, and welding cracks are unlikely to occur.

In some embodiments, the first post terminal is provided with an accommodating groove that is in communication with the perforation, and a part of the conductive part passes through the perforation and is received in the accommodating groove.

In the above technical solution, since the first post terminal is provided with the accommodating groove, the weight of the first post terminal can be reduced, which is conducive to increasing the gravimetric energy density of the battery cell. In addition, the conductive part is partially received in the accommodating groove, such that the space occupied in the housing can be reduced, which is conducive to increasing the volume of the active substance-coated part, and increasing the volumetric energy density of the battery cell.

In some embodiments, the first post terminal includes an end wall and a side wall, the end wall is located on a side of the side wall proximal to the inside of the housing, the end wall and the side wall define the accommodating groove in an enclosing manner, an opening of the accommodating groove is open to a side distal to the inside of the housing, the plurality of perforations are all formed in the end wall, such that the accommodating groove is in communication with the inside of the housing, and an outer end part of the conductive part extends into the accommodating groove through the perforation and is connected to the end wall.

In the above technical solution, the accommodating groove is open to a side of the first post terminal facing away from the inside of the housing, which is conducive to welding the conductive part and the end wall through the accommodating groove from the outer side of the first post terminal, i.e., a side of the first post terminal distal to the active substance-coated part. That is, the first post terminal and the conductive part can be welded externally through the accommodating groove, which facilitates processing and manufacturing of the battery cell, and reduces the costs of processing and manufacturing.

In some embodiments, the outer end parts of the plurality of conductive parts connected to the end wall are stacked and connected on the end wall; or the outer end parts of the plurality of conductive parts connected to the end wall are spaced apart on the end wall.

In the above technical solution, when the outer end parts of the plurality of conductive parts connected to the end wall are stacked and connected on the end wall, the miniaturization design of the first post terminal is facilitated. When the outer end parts of the plurality of conductive parts connected to the end wall are spaced apart on the end wall, the reliability of the electrical connection between each conductive part and the first post terminal can be improved.

In some embodiments, the housing assembly further includes a post terminal cover plate, the post terminal cover plate is fitted to the first post terminal and closes the opening, and the post terminal cover plate is electrically connected to the first post terminal.

In the above technical solution, arranging the post terminal cover plate to close the opening of the accommodating groove can prevent the leakage of the electrolytic solution in the housing through the opening of the accommodating groove. In addition, since the post terminal cover plate closes the opening of the accommodating groove and is electrically connected to the first post terminal, the post terminal cover plate may be used to easily achieve an indirect electrical connection between the first post terminal and a busbar component and is conducive to increasing the connection area at the electrical connection, thereby helping reduce the resistance of the electrical connection.

In some embodiments, the housing is provided with a plurality of post terminals, and at least one of the plurality of post terminals is the first post terminal.

In the above technical solution, at least one of all the post terminals of the housing assembly is provided as the first post terminal, such that a part of the post terminals in the battery cell may be the first post terminals with a plurality of perforations, or all the post terminals may be the first post terminals with a plurality of perforations, thereby achieving flexible selection and matching according to the manufacturing requirements, cost requirements, and the like.

In a second aspect, the embodiments of the present application further provide a battery. The battery includes the above battery cell.

In the above technical solution, the battery is provided with the above battery cell and the energy density of the battery cell can be increased, which is therefore conducive to increasing the energy density of the battery.

In a third aspect, the embodiments of the present application further provide an electric device. The electric device includes the above battery.

In the above technical solution, the electric device is provided with the above battery and the energy density of the battery can be increased, which is therefore conducive to prolonging the usage duration of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle as an electric device according to some embodiments of the present application;
FIG. 2 is an exploded view of a battery cell used in a battery according to some embodiments of the present application;
FIG. 3 is a three-dimensional view of a battery cell according to some embodiments of the present application;
FIG. 4 is an exploded view of a part of construction of the battery cell shown in FIG. 3;
FIG. 5 is a partially enlarged view of the portion A shown in FIG. 4;
FIG. 6 is an orthographic projection view of the battery cell shown in FIG. 3;
FIG. 7 is a cross-sectional view along the line B-B in FIG. 6;
FIG. 8 is a partially enlarged view of the portion C shown in FIG. 7;
FIG. 9 is a partial cross-sectional view of a battery cell according to some embodiments of the present application;
FIG. 10 is a partial cross-sectional view of a battery cell according to some embodiments of the present application;
FIG. 11 is a three-dimensional view of a first post terminal according to some embodiments of the present application;
FIG. 12 is an orthographic projection view of the first post terminal shown in FIG. 11;
FIG. 13 is a cross-sectional view along the line D-D in FIG. 12;
FIG. 14 is an orthographic projection view of a battery cell according to some embodiments of the present application;
FIG. 15 is a partially enlarged view of the portion E shown in FIG. 14; and
FIG. 16 is a partial cross-sectional view of a battery cell according to some embodiments of the present application.

Reference numerals: electric device 1000; battery 100; controller 200; motor 300; case 20; first case 201; second case 202; battery cell 10; housing assembly 1; housing 11; first post terminal 12; perforation 121; end wall 122; side wall 123; accommodating groove 124; opening 1241; post terminal outer end surface 125; post terminal cover plate 13; battery cell assembly 2; electrode assembly 20; middle region 201; active substance-coated part 21; conductive part 22; tab plate 220; gathering part 221; connecting part 222; connection base part 223; outer end part of the conductive part 224; adapting piece 225; first direction Z; second direction X; and third direction Y.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to more than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and pouch battery cells, which are not limited in the embodiments of the present application.

Illustratively, a battery cell may generally include a housing, a battery cell assembly, and an electrolytic solution. The housing is configured to accommodate the battery cell assembly and the electrolytic solution. The housing is provided with a plurality of post terminals, which generally include at least one positive electrode post terminal and at least one negative electrode post terminal. The battery cell assembly includes one or a plurality of electrode assemblies, and the electrode assembly is formed by stacking or winding a positive electrode plate, a negative electrode plate, and a separator.

The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal.

The material of the separator is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, lithium manganate, etc., the material of the negative electrode current collector may be copper, and the material of the negative electrode active substance layer may be carbon, silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

The battery mentioned in the embodiments of the present application refers to a single physical module including one or a plurality of battery cells to provide higher voltage and capacity. For example, the battery mentioned in the present application may be a battery module group, a battery pack, or the like. A battery module group generally includes a plurality of battery cells. A battery pack generally includes a case used for encapsulating one or a plurality of battery cells or one or a plurality of battery module groups. The case can prevent liquid or other foreign matters from affecting the charging or discharging of the battery cells.

In the battery, a plurality of battery cells may be connected in series, in parallel, or in series-parallel. The series-parallel connection means that both series connection and parallel connection are present for the connection among the plurality of battery cells. The plurality of battery cells can be directly connected in series, in parallel, or in series-parallel, and then the whole formed by the plurality of battery cells is accommodated in the case. Alternatively, the battery may also be in a form where a plurality of battery cells are first connected in series, in parallel, or in series-parallel to give a battery module group, and then a plurality of battery module groups are connected in series, in parallel, or in series-parallel to form a whole and accommodated in the case.

In the related art, during the manufacturing of a battery cell, a current collector is coated with an active substance and then cut to obtain an electrode plate consisting of a current collector coated with an active substance layer (referred to as an active substance-coated part) and a current collector not coated with an active substance layer (referred to as a tab plate). The positive and negative electrode plates and a separator are then stacked or wound in sequence to obtain an electrode assembly. The active substance-coated part of the electrode assembly is welded to a post terminal through a conductive part, where the conductive part may be a tab part formed by stacking and connecting tab plates of the same polarity in the electrode assembly in a gathering manner, or may be jointly formed by the tab part and an adapting piece welded to the tab part.

In general, a plurality of electrode assemblies are provided in the housing of the battery cell. When the tab part is processed, the tab plates of the same polarity in the plurality of electrode assemblies are all stacked together, and therefore, the tab part includes a large number of tab plates, resulting in a great gathering height of the tab part formed by connecting the tab plates in a gathering manner (the gathering height refers to a vertical distance from a starting position for connecting the tab plates in a gathering manner to the active substance-coated part, and the direction of the vertical distance is referred as a tab extension direction). Therefore, the occupied size of the tab part in the housing in the tab extension direction is large, and when the size of the housing is fixed, the space that can be occupied by the active substance-coated part in the tab extension direction will be affected, resulting in difficulty in increasing the energy density of the battery cell. In addition, when all the tab plates of the same polarity are gathered together, a tab plate of an electrode plate that is farther from the starting position for connecting the tab plates in a gathering manner (i.e., an edge tab plate) has greater deformation, resulting in a greater risk of cracking.

Based on the above considerations, in order to increase the energy density of the battery cell, a battery cell is designed in the present application, where a plurality of conductive parts of the same polarity are provided in the battery cell, and each conductive part includes a plurality of tab plates that are stacked and connected in a gathering manner, such that the number of tab plates included in each conductive part can be reduced, and the gathering height of the tab part in each conductive part can be reduced, thereby reducing the occupied size of each conductive part in the housing in the tab extension direction. When the size of the housing is fixed, the space that can be occupied by the active substance-coated part in the tab extension direction can be increased, which is conducive to increasing the energy density of the battery cell. Moreover, the deformation of the tab plate at the edge position in the conductive part can be reduced to a certain extent, thereby reducing the risk of cracking of the tab plate.

In addition, in the embodiments of the present application, a plurality of perforations are further formed on at least one post terminal, and at least one conductive part electrically connected to the post terminal is provided in each perforation in a penetrating manner, such that the post terminal can accommodate at least a part of the conductive part to further reduce the space occupied by the conductive part in the housing, further increase the space that can be occupied by the active substance-coated part in the housing, and further increase the energy density of the battery cell. Moreover, the plurality of perforations allow the conductive part to flexibly select the perforation. For example, when the plurality of perforations are at different distances from the conductive part, the conductive part can select to extend through a close perforation, which is conducive to reducing the extension length of the conductive part in the housing, thereby further reducing the space occupied by the conductive part in the housing. As another example, the conductive part can also select to extend through a perforation in which only a few conductive parts are provided in a penetrating manner, such that the assembly is facilitated, the problem of a large size of some perforation can be mitigated, and the strength of the post terminal can be improved.

The embodiments of the present application further provide an electric device using the battery of the present application as a power source. The electric device may be, but is not limited to, a mobile phone, a tablet, a laptop computer, an electric toy, an electric tool, an electric bicycle, an electric vehicle, a ship, a spacecraft, and the like. The electric toy may include a stationary or mobile electric toy, such as a game console, an electric vehicle toy, an electric ship toy, and an electric airplane toy, and the spacecraft may include an airplane, a rocket, a space shuttle, a spaceship, and the like.

For ease of explanation in the following embodiments, the structures of the electric device, the battery, and the battery cell of the present application are described by taking a vehicle as the electric device as an example.

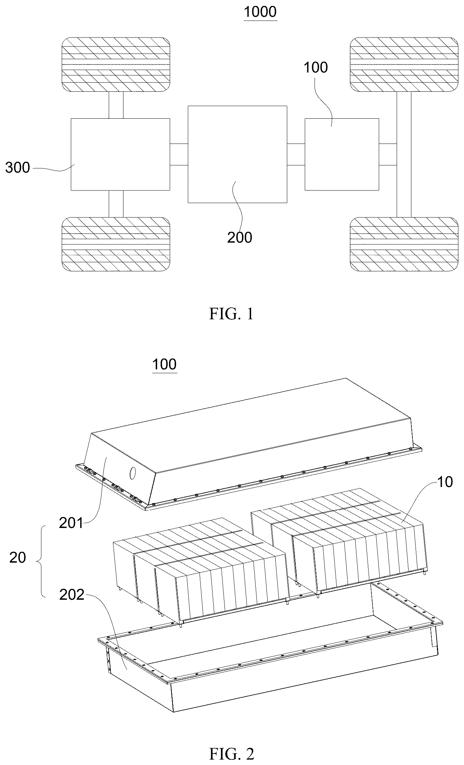

Referring to FIG. 1, FIG. 1 is a schematic structural diagram of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 100 is arranged in the vehicle, and the battery 100 may be arranged at the bottom, head, or tail of the vehicle. The battery 100 may be configured to supply power to the vehicle. For example, the battery 100 may serve as an operation power source for the vehicle. The vehicle may further include a controller 200 and a motor 300. The controller 200 is configured to control the battery 100 to supply power to the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery cell 10 used in the battery 100 according to some embodiments of the present application. The battery 100 includes a case 20 and a plurality of battery cells 10, and the battery cells 10 are accommodated in the case 20. The case 20 is configured to provide an assembly space for the battery cells 10, and the case 20 may be in various structures. In some embodiments, the case 20 may include a first case 201 and a second case 202. The first case 201 and the second case 202 are lidded with each other. The first case 201 and the second case 202 jointly define an assembly space for accommodating the battery cells 10. The second case 202 may be of a hollow structure with one end open, the first case 201 may be of a plate structure, and the first case 201 lids the open side of the second case 202, such that the first case 201 and the second case 202 jointly define an assembly space; or both the first case 201 and the second case 202 may be of hollow structures with one side open (for example, as shown in FIG. 2), and the open side of the first case 201 lids the open side of the second case 202. Certainly, the case 20 formed by the first case 201 and the second case 202 may be in various shapes, such as a cylinder or a rectangular parallelepiped.

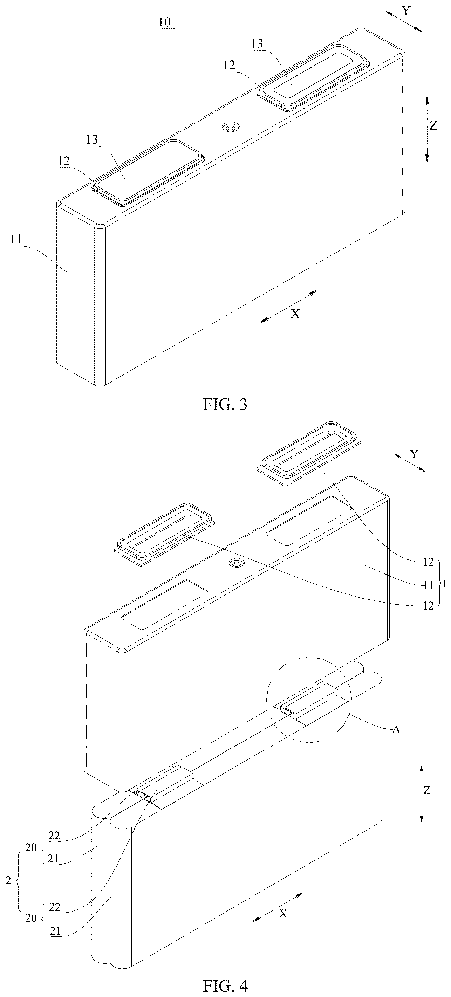

Referring to FIG. 3, FIG. 3 is a schematic diagram of a battery cell 10 according to some embodiments of the present application. The battery cell 10 is in the shape of a rectangular parallelepiped, and the width direction of the battery cell 10 is the first direction Z, the length direction of the battery cell 10 is the second direction X, and the thickness direction of the battery cell 10 is the third direction Y. The first direction Z, the second direction X, and the third direction Y are perpendicular to each other. But not limited thereto, in other embodiments of the present application, the battery cell 10 may also be cylindrical, flat, prismatic, or in other shapes.

Referring to FIG. 4, FIG. 4 is an exploded view of a part of construction of the battery cell shown in FIG. 3. In the embodiments of the present application, the battery cell 10 includes a housing assembly 1 and a battery cell assembly 2. The housing assembly 1 includes a housing 11 and a first post terminal 12 disposed on the housing 11, and the battery cell assembly 2 is received in the housing 11. The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example.

The housing 11 is provided with post terminals for electrical connection to the battery cell assembly 2 to ensure normal charging and discharging operations of the battery cell 10. Generally, the number of post terminals is at least two, specifically including at least one positive electrode post terminal and at least one negative electrode post terminal. For example, when the number of post terminals is two, one is a positive electrode post terminal and the other is a negative electrode post terminal, and the two are electrically connected to positive and negative output positions of the battery cell assembly 2, respectively. As another example, when the number of post terminals is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2.

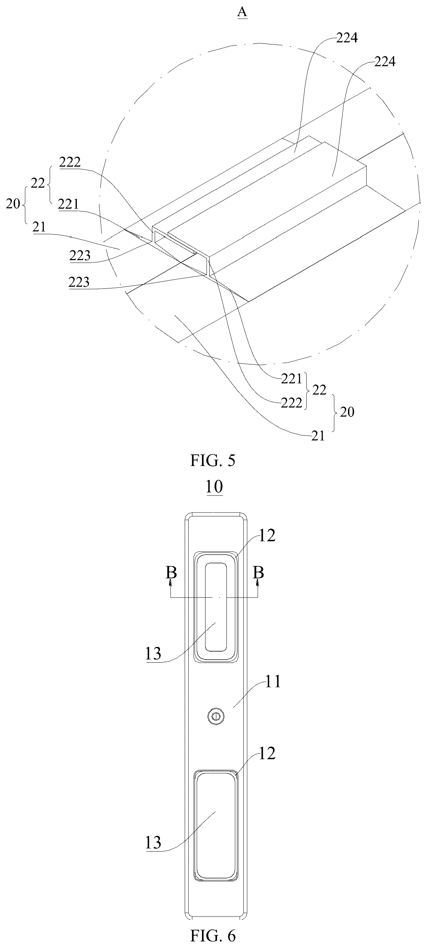

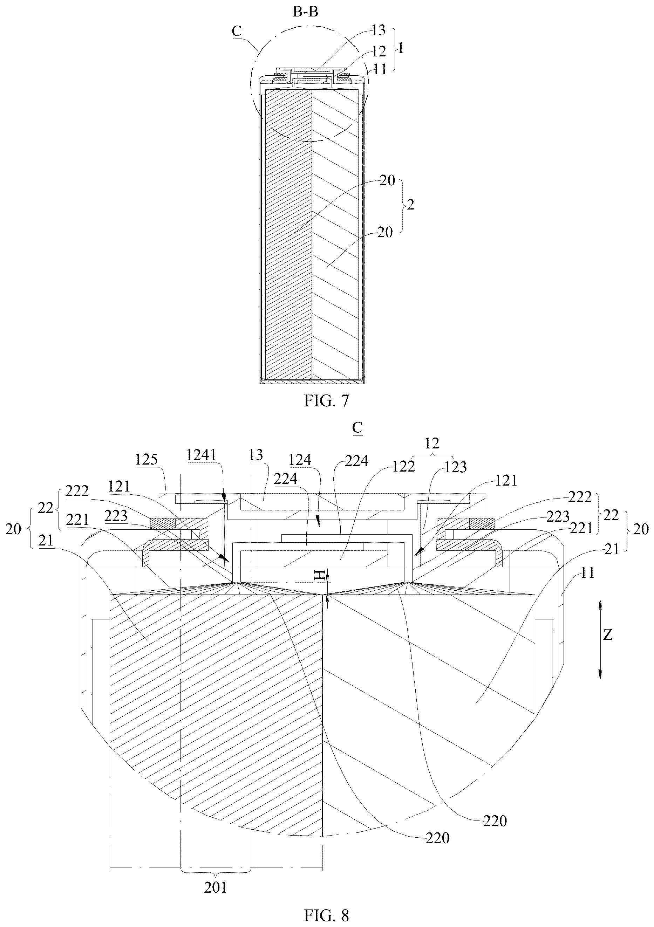

In the embodiments of the present application, at least one of the plurality of post terminals on the housing 11 is the first post terminal 12, and the first post terminal 12 can be used as a positive electrode post terminal or a negative electrode post terminal. Referring to FIGs. 5-8, FIG. 5 is a partially enlarged view of the portion A shown in FIG. 4, FIG. 6 is an orthographic projection view of the battery cell 10 shown in FIG. 3, FIG. 7 is a cross-sectional view along the line B-B in FIG. 6, and FIG. 8 is a partially enlarged view of the portion C shown in FIG. 7. The battery cell assembly 2 includes conductive parts 22, and each first post terminal 12 is electrically connected to a plurality of conductive parts 22, separately. A plurality of perforations 121 are formed on the first post terminal 12, and at least one conductive part 22 is provided in each perforation 121 in a penetrating manner, separately, such that the plurality of conductive parts 22 electrically connected to the first post terminal 12 can all be at least partially received in the first post terminal 12 to occupy the space in the first post terminal 12, so as to reduce the space in the housing 11 occupied by the conductive parts 22, which is conducive to increasing the energy density of the battery cell 10.

When the housing 11 is provided with a plurality of post terminals, all the post terminals on the housing 11 may be the first post terminals 12 electrically connected to a plurality of conductive parts 22, or a part of the post terminals on the housing 11 may be the first post terminals 12 electrically connected to a plurality of conductive parts 22. When a part of the post terminals on the housing 11 are the first post terminals 12 electrically connected to a plurality of conductive parts 22, the remaining post terminals on the housing 11 are second post terminals electrically connected to one conductive part 22 (not shown). Regardless of whether the post terminal on the housing 11 is the first post terminal 12 or the second post terminal, both the first post terminal 12 and the second post terminal can be electrically connected to the battery cell assembly 2 to ensure the normal charging and discharging processes of the battery cell 10. In order to simplify the description, the following description is mainly made with the housing 11 being provided with a plurality of post terminals, and all the post terminals being the first post terminals 12, i.e., each post terminal being electrically connected to a plurality of conductive parts 22, as an example.

In the embodiments of the present application, the battery cell assembly 2 includes an active substance-coated part 21. The active substance-coated part 21 is disposed in the housing 11. The active substance-coated part 21 is a part of the battery cell assembly 2 coated with an active substance, and can assist in the deintercalation of metal ions during the charging and discharging processes of the battery cell 10. The conductive part 22 is a metal structure that electrically connects the active substance-coated part 21 and the post terminal, and is not coated with the active substance. Both the first post terminal 12 and the second post terminal can be electrically connected to the active substance-coated part 21 through the conductive part 22 to enable the charging and discharging operations of the battery cell 10.

It can be understood that the active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal.

Referring to FIGs. 5 and 8 again, in the embodiments of the present application, the conductive part 22 includes a plurality of tab plates 220 that are stacked and connected in a gathering manner. Specifically, the conductive part 22 includes a gathering part 221 and a connecting part 222, the gathering part 221 is formed by gathering the plurality of tab plates 220, the connecting part 222 is formed by gathering and connecting the plurality of tab plates 220, and the gathering part 221 connects the connecting part 222 and the active substance-coated part 21. That is, the plurality of tab plates 220 only converge (that is, get together in a direction toward each other) and gather but are not connected when forming the gathering part 221, while the plurality of tab plates 220 not only converge and gather but are also connected into an integrated structure when forming the connecting part 222. For example, the plurality of tab plates 220 may be connected into an integrated plate structure by welding (such as ultrasonic welding) to form the connecting part 222. For example, the plurality of tab plates 220 may also converge and be connected to form the connecting part 222 by conductive adhesive bonding, etc.

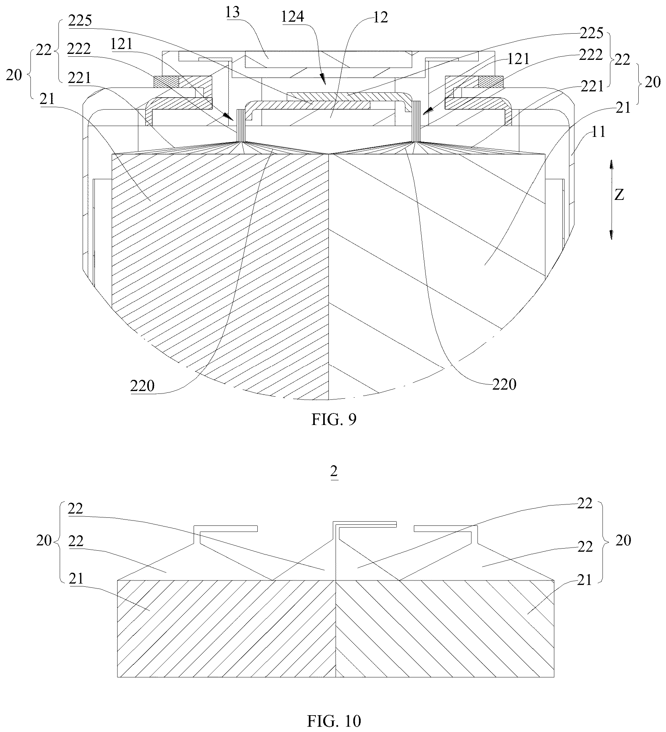

The connecting part 222 is configured to be electrically connected to the first post terminal 12, that is, the connecting part 222 may be directly connected to the first post terminal 12 (for example, as shown in FIG. 8) or indirectly connected to the first post terminal (for example, as shown in FIG. 9, which is a partial cross-sectional view of a battery cell according to some embodiments of the present application). In some optional embodiments, for example, as shown in FIG. 8, the conductive part 22 may be formed by only a plurality of tab plates 220, and in this case, the tab plates 220 may be welded to the first post terminal 12, such that the structure and processing of the conductive part 22 can be simplified. Alternatively, in other optional embodiments, for example, as shown in FIG. 9, the conductive part 22 may further include an adapting piece 225 in addition to the plurality of tab plates 220, and the tab plates 220 are connected to the first post terminal 12 through the adapting piece 225. For example, one end of the adapting piece 225 is welded to the connecting part 222, and the other end of the adapting piece 225 is welded to the first post terminal 12, such that the plurality of tab plates 220 are connected to the first post terminal 12 through the adapting piece 225. In this case, the adapting piece 225 can be welded to the first post terminal 12 at a part avoiding the connection to the tab plates 220, such that the adapting piece 222 can be firmly welded to the first post terminal 12, and welding cracks are unlikely to occur.

It can be understood that the tab plates 220 are divided into positive electrode tab plates 220 and negative electrode tab plates 220. The positive electrode tab plates 220 that need to gather together are stacked together and ultrasonically pre-welded to form a connecting part 222 of the positive electrode, which can reduce the gap between layers and enable the plurality of fluffy positive electrode tab plates 220 to form a plate structure of a certain rigidity. Similarly, the negative electrode tab plates 220 that need to gather together are stacked together and ultrasonically pre-welded to form a connecting part 222 of the negative electrode, which can reduce the gap between layers and enable the plurality of fluffy negative electrode tab plates 220 to form a plate structure of a certain rigidity. Illustratively, the current collector and the tab plates 220 may be an integrated member, such as an integrally formed aluminum foil for the positive electrode plate, and an integrally formed copper foil for the negative electrode plate.

Referring to FIG. 8 again, the connection position of the gathering part 221 and the connecting part 222 is a connection base part 223, and a vertical distance between the connection base part 223 and the active substance-coated part 21 is a gathering height (e.g., the distance H shown in FIG. 8), and the direction of the vertical distance is referred to as a tab extension direction (e.g., the first direction Z shown in FIG. 8). In the embodiments of the present application, each first post terminal 12 is electrically connected to a plurality of conductive parts 22, i.e., a plurality of conductive parts 22 of the same polarity exist in the battery cell 10. That is, all the positive electrode tab plates 220 in the battery cell 10 gather and are connected to form a plurality of connecting parts 222 of positive electrodes, and all the negative electrode tab plates 220 in the battery cell 10 gather and are connected to form a plurality of connecting parts 222 of negative electrodes. Since each conductive part 22 includes a plurality of tab plates 220 that are stacked and connected in a gathering manner, the number of tab plates 220 included in each conductive part 22 can be reduced, and the gathering height of the plurality of tab plates 220 in each conductive part 22 can be reduced, thereby reducing the occupied size of each conductive part 22 in the housing 11 in the tab extension direction. When the size of the housing 11 is fixed, the space that can be occupied by the active substance-coated part 21 in the tab extension direction can be increased, which is conducive to increasing the energy density of the battery cell 10. Moreover, the relatively small number of tab plates 220 included in each conductive part 22 can reduce the deformation of the tab plate 220 at the edge position in the conductive part 22 to a certain extent, thereby reducing the risk of cracking of the tab plate 220.

In addition, in the embodiments of the present application, a plurality of perforations 121 are formed on the first post terminal 12, and at least one conductive part 22 is provided in each perforation 121 in a penetrating manner, separately. Compared with a solution where all the conductive parts 22 electrically connected to the first post terminal 12 pass through a single perforation 121, the embodiments of the present application allow to reduce the size of each perforation 121 to mitigate the adverse effect of a large size of the perforation 121 on the structural strength of the first post terminal 12. In addition, the plurality of perforations 121 allow the conductive part 22 to flexibly select the perforation 121. For example, when the plurality of perforations 121 are at different distances from the conductive part 22, the conductive part 22 can select to extend through a close perforation 121, which is conducive to reducing the extension length of the conductive part 22, and further reducing the space occupied by the conductive part 22 in the housing 11. As another example, the conductive part 22 can select to extend through a perforation 121 in which only a few conductive parts 22 are provided in a penetrating manner, such that the assembly is facilitated, the problem of a large size of some perforation 121 can be mitigated, and the structural strength of the first post terminal 12 can be improved.

In the embodiments of the present application, the number of the perforations 121 on the first post terminal 12 is not limited, and may be, for example, two, three, four, or even more. When the number of the perforations 121 on the first post terminal 12 is two, the structural strength of the first post terminal 12 can be improved, and the electrical connection area between the conductive part 22 and the first post terminal 12 can be increased as much as possible.

In the embodiments of the present application, the number of the conductive parts 22 electrically connected to the first post terminal 12 and the number of the perforations 121 may be the same or different, and the number of the conductive parts 22 is greater than or equal to the number of the perforations 121, so as to ensure that at least one conductive part 22 is provided in each perforation 121 in a penetrating manner, separately. For example, when the number of the conductive parts 22 electrically connected to the first post terminal 12 is two, the number of the perforations 121 on the first post terminal 12 may be two. For example, when the number of the conductive parts 22 electrically connected to the first post terminal 12 is three, the number of the perforations 121 on the first post terminal 12 may be two or three. When two perforations 121 are formed, the structural strength of the first post terminal 12 can be improved, and the electrical connection area to the conductive parts 22 can be increased.

For example, when the number of the conductive parts 22 electrically connected to the first post terminal 12 is four, the number of the perforations 121 on the first post terminal 12 may be two, three, or four. When two perforations 121 are formed, the structural strength of the first post terminal 12 can be improved, and the electrical connection area to the conductive parts 22 can be increased. When four perforations 121 are formed, the space occupied by the conductive parts 22 in the housing 11 can be fully reduced, which is conducive to increasing the energy density of the battery cell 10.

Referring to FIGs. 4, 7, and 8 again, in some embodiments of the present application, the battery cell assembly 2 includes at least one electrode assembly 20, that is, the battery cell assembly 2 includes one or a plurality of electrode assemblies 20, and each electrode assembly 20 includes the conductive part 22. For example, illustratively, when the number of the electrode assembly 20 is one, the electrode assembly 20 includes a plurality of conductive parts 22 electrically connected to the first post terminals 12. In another example, illustratively, when the number of the electrode assembly 20 is more than one, each electrode assembly 20 includes at least one conductive part 22 electrically connected to the first post terminals 12, such that the plurality of electrode assemblies 20 are provided with a plurality of conductive parts 22 electrically connected to the first post terminals 12.

In the embodiments of the present application, the perforation 121 is formed on the first post terminal 12 corresponding to a position of each electrode assembly 20, separately. It is worth noting that the orthographic projection of the perforation 121 in the tab extension direction being located on an electrode assembly 20 indicates that the perforation 121 is formed corresponding to the position of the electrode assembly 20. In the embodiments of the present application, for any electrode assembly 20, an orthographic projection of at least one perforation 121 in the tab extension direction is located on the electrode assembly, that is, at least one perforation 121 is formed on the first post terminal 12 corresponding to the position of each electrode assembly 20, separately.

In this way, the conductive part 22 extending from the electrode assembly 20 can pass through the perforation 121 formed corresponding to the electrode assembly 20, so as to well reduce the extension length of the connecting part 222 in the conductive part 22 in the housing 11, and reduce the space occupied by the conductive part 22 in the housing 11, which is conducive to increasing the energy density of the battery cell 10.

However, the present application is not limited thereto. In other embodiments of the present application, when no enough space exists in a perforation 121 corresponding to an electrode assembly 20, or when the number of the conductive parts 22 of the same polarity extending from an electrode assembly 20 is large, some of the plurality of conductive parts 22 proximal to the adjacent electrode assembly 20 may pass through the perforation 121 formed corresponding to the adjacent electrode assembly 20.

Referring to FIG. 8 again, illustratively, when the perforation 121 is formed on the first post terminal 12 corresponding to the position of each electrode assembly 20, separately, the perforation 121 is formed on the first post terminal 12 corresponding to a position of at least one connection base part 223 in each electrode assembly 20, that is, the orthographic projection of the connection base part 223 of at least one conductive part 22 in each electrode assembly 20 in the tab extension direction is located within the perforation 121. Therefore, the conductive part 22 can pass through the perforation 121 corresponding to the connection base part 223 thereof, such that the extension length of the connecting part 222 in the conductive part 22 in the housing 11 can be reduced, and the space occupied by the conductive part 22 in the housing 11 can be reduced, which is conducive to increasing the energy density of the battery cell 10. In addition, it is conducive to reducing the redundancy of the conductive part 22 in the housing 11, and reducing the risk of short circuit between the redundancy of the conductive part 22 in the housing 11 and the active substance-coated part 21.

Referring to FIG. 8 again, when the perforation 121 is formed on the first post terminal 12 corresponding to the position of each connection base part 223 in each electrode assembly 20, separately, the extension length of the connecting part 222 of each conductive part 22 in the housing 11 can be reduced, and the space occupied by each conductive part 22 in the housing 11 can be reduced, which is conducive to further increasing the energy density of the battery cell 10. In addition, it is conducive to reducing the redundancy of each conductive part 22 in the housing 11, reducing the risk of short circuit between the redundancy of the conductive part 22 in the housing 11 and the active substance-coated part 21 more effectively, and improving the reliability of the battery cell 10.

In some embodiments of the present application, referring to FIG. 8 again, the perforation 121 is formed on the first post terminal 12 corresponding to a middle region 201 in the thickness direction of each electrode assembly 20, separately. That is, for any electrode assembly 20, an orthographic projection of at least one perforation 121 in the tab extension direction is located on the middle region 201 of the respective electrode assembly 20. In the present application, "the middle region 201 in the thickness direction of the electrode assembly 20" is understood broadly as a region between 1/3 and 2/3 of the thickness in the thickness direction of the electrode assembly 20.

In this way, the perforation 121 is centered or nearly centered relative to the electrode assembly 20, such that the conductive parts 22 on the electrode assembly 20 can be proximal to the centrally formed perforation 121 regardless of the positions from which the conductive parts extend and the number of the conductive parts, such that the conductive parts 22 do not extend very much before passing through the perforation 121, and the space occupied by the conductive parts 22 in the housing 11 can be well reduced.

Referring to FIG. 8 again, when the perforation 121 is formed on the first post terminal 12 corresponding to the position of each electrode assembly 20, separately, the connection base part 223 of at least one conductive part 22 in the electrode assembly 20 illustratively corresponds to the middle region 201 in the thickness direction of the electrode assembly 20. That is, for any electrode assembly 20, an orthographic projection of at least one connection base part 223 in the tab extension direction is located on the middle region 201 of the respective electrode assembly 20.

Illustratively, when the connection base part 223 of the conductive part 22 corresponds to the middle region 201 in the thickness direction of the electrode assembly 20, the gathering height H of the conductive part 22 may be at least 1/2 the product of the number of the tab plates 220 included in the conductive part 22 and the thickness of each tab plate 220.

Therefore, the tab plates 220 of the conductive part 22 in the electrode assembly 20 are gathered centrally or nearly centrally, such that the gathering height of the conductive part 22 can be reduced, so as to reduce the occupied size of the conductive part 22 in the housing 11 in the tab extension direction, which is conducive to increasing the space that can be occupied by the active substance-coated part 21 in the tab extension direction, and increasing the energy density of the battery cell 10. In addition, the distance between the centrally or nearly centrally gathered conductive part 22 and each perforation 121 corresponding to the respective electrode assembly 20 can be short, such that the conductive part 22 does not extend very much before passing through the perforation 121, and the space occupied by each conductive part 22 in the housing 11 can be well reduced.

Further, when the connection base part 223 of the conductive part 22 in the electrode assembly 20 corresponds to the middle region 201 in the thickness direction of the electrode assembly 20 and the perforation 121 is formed on the first post terminal 12 corresponding to the position of the connection base part 223 of each conductive part 22, separately, the perforation 121 is formed on the first post terminal 12 corresponding to the middle region 201 in the thickness direction of each electrode assembly 20, separately, which is more conducive to reducing the distance from the conductive part 22 to the perforation 121, and reducing the extension length of the conductive part 22 in the housing 11 before the conductive part passes through the perforation 121, thereby well reducing the space occupied by the conductive part 22 in the housing 11.

Referring to FIG. 10, FIG. 10 is a partial cross-sectional view of the battery cell 10 according to some embodiments of the present application. In some embodiments of the present application, the battery cell assembly 2 includes at least one combination. Each combination includes two electrode assemblies 20, each electrode assembly 20 in each combination includes a plurality of conductive parts 22 of the same polarity, separately, and at least two adjacently arranged conductive parts 22 of the same polarity belonging to different electrode assemblies 20 in each combination are connected to each other.

For example, two electrode assemblies 20 shown in FIG. 10 form a combination. The left electrode assembly 20 includes two positive electrode conductive parts 22, the right electrode assembly 20 also includes two positive electrode conductive parts 22, and one right positive electrode conductive part 22 of the two positive electrode conductive parts 22 of the left electrode assembly 20 is connected to one left positive electrode conductive part 22 of the two positive electrode conductive parts 22 of the right electrode assembly 20.

Therefore, if two positive electrode conductive parts 22 extend from each electrode assembly 20, the two electrode assemblies 20 have four mutually independent positive electrode conductive parts 22 in total, and then four perforations 121 need to be formed on the first post terminal 12 of the positive electrode. Compared with this solution, in the above embodiments, two of the positive electrode conductive parts 22 are connected to each other, such that only three perforations 121 need to be formed on the first post terminal 12 of the positive electrode, so as to reduce the number of independent conductive parts 22 included in the combination to a certain extent, and further reduce the number of perforations 121 on the first post terminal 12, thereby improving the structural strength of the first post terminal 12, and improving the assembly efficiency. If both the electrode assemblies 20 have large thickness and only one positive electrode conductive part 22 extends from each electrode assembly 20, the positive electrode conductive part 22 of each electrode assembly 20 includes a large number of tab plates 220, and the conductive part 22 has a great gathering height in the tab extension direction and occupies a large space. Compared with this solution, in the above embodiments, two positive electrode conductive parts 22 extend from each electrode assembly 20, so as to reduce the number of tab plates 220 included in each conductive part 22 to a certain extent, and reduce the space occupied by each conductive part 22 in the tab extension direction.

Therefore, in the above technical solution, at least two adjacently arranged conductive parts of the same polarity belonging to different electrode assemblies 20 in each combination are connected to each other, such that both the number and the gathering height of the conductive parts 22 can be considered, thereby avoiding a large number of perforations 121, ensuring the structural strength of the first post terminal 12, and reducing the space in the housing 11 occupied by the conductive parts 22 in the tab extension direction.

Referring to FIG. 8 again, in some embodiments of the present application, the conductive part 22 is provided in a perforation 121 closest to a corresponding connection base part 223 in a penetrating manner. In this way, each conductive part 22 is separately provided in the perforation 121 closest to the connection base part 223 thereof in a penetrating manner, such that the conductive part 22 selects to extend through a close perforation 121, which is conducive to reducing the extension length of the conductive part 22 in the housing 11 before the conductive part passes through the perforation 121, and reducing the space occupied by the conductive part 22 in the housing 11, thereby increasing the energy density of the battery cell 10. In addition, it is conducive to reducing the redundancy of the conductive part 22 in the housing 11, effectively reducing the risk of short circuit between the redundancy of the conductive part 22 in the housing 11 and the active substance-coated part 21, and improving the reliability of the battery cell 10.

Referring to FIG. 8 again, when the perforation 121 is formed on the first post terminal 12 corresponding to the position of each connection base part 223, separately, each conductive part 22 can pass through the perforation 121 corresponding to the connection base part 223 thereof at a shorter distance, such that the extension length of the connecting part 222 of each conductive part 22 in the housing 11 can be further reduced, and the space occupied by each conductive part 22 in the housing 11 can be reduced, which is conducive to further increasing the energy density of the battery cell 10. In addition, it is conducive to reducing the redundancy of each conductive part 22 in the housing 11, reducing the risk of short circuit between the redundancy of the conductive part 22 in the housing 11 and the active substance-coated part 21 more effectively, and improving the reliability of the battery cell 10.

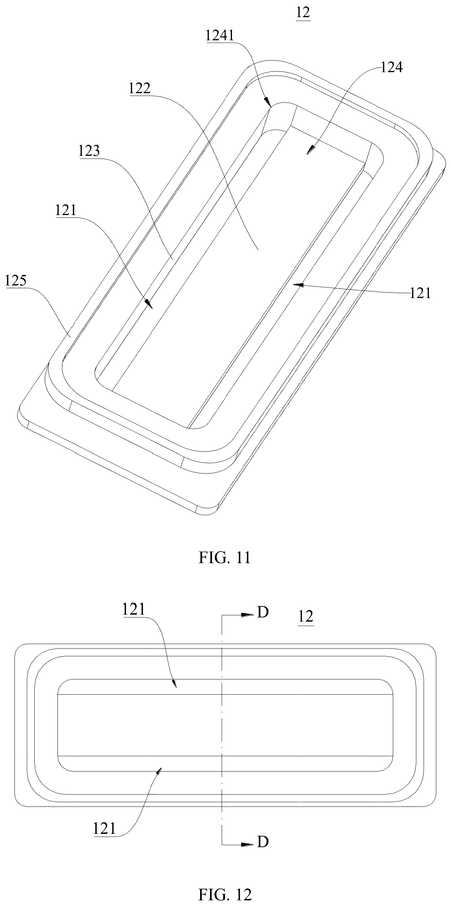

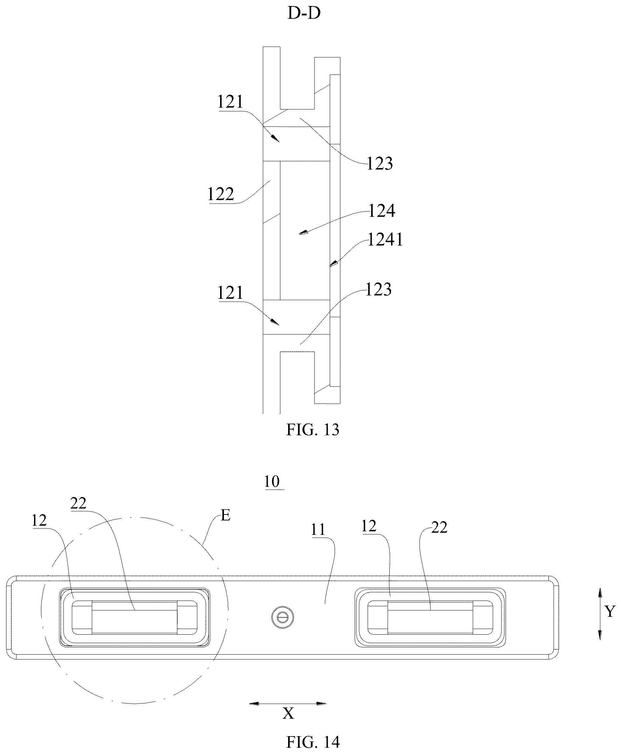

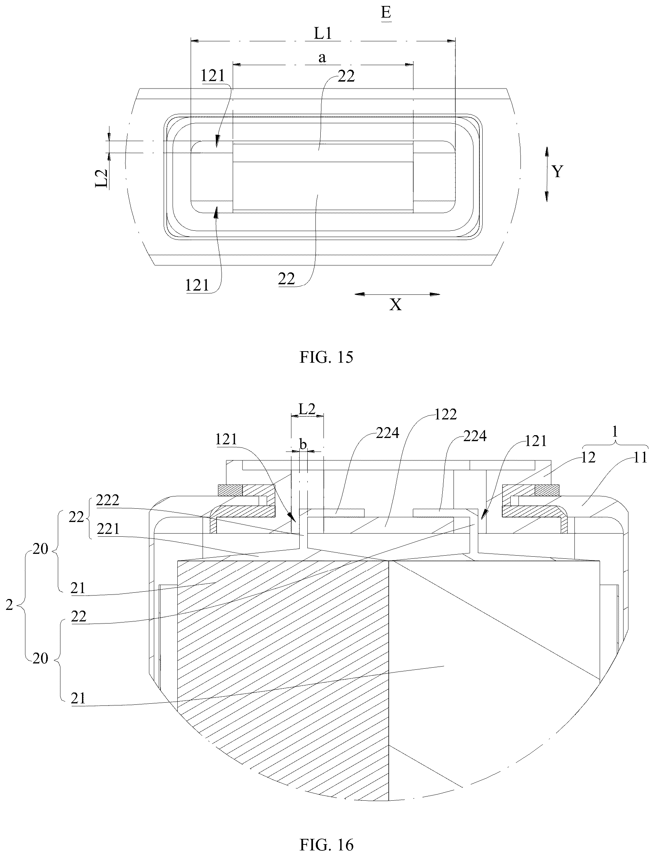

Referring to FIGs. 11-15, FIG. 11 is a three-dimensional view of the first post terminal 12 according to some embodiments of the present application, FIG. 12 is an orthographic projection view of the first post terminal 12 shown in FIG. 11, FIG. 13 is a cross-sectional view along the line D-D in FIG. 12, FIG. 14 is an orthographic projection view of the battery cell 10 according to some embodiments of the present application, and FIG. 15 is a partially enlarged view of the portion E shown in FIG. 14. In some embodiments of the present application, the perforation 121 is an elongated hole, the conductive part 22 includes a connecting part 222 provided in the perforation 121 in a penetrating manner, the connecting part 222 is sheet-shaped, the length direction of a part of the connecting part 222 located in the perforation 121 is consistent with the length direction of the perforation 121 (for example, the second direction X shown in FIG. 15), and the width direction of the perforation 121 (for example, the third direction Y shown in FIG. 15) is consistent with the thickness direction of the connecting part 222.

Therefore, the perforation 121 is provided in an elongated shape which is roughly matched with the shape of the connecting part 222 of the conductive part 22, such that the connecting part 222 of the conductive part 22 can easily pass through the perforation 121, and with the conductive part 22 passing through the perforation 121, less space is left in the perforation 121, which is conducive to reducing the size of the perforation 121, facilitating the subsequent sealing of the perforation 121, and improving the structural strength of the first post terminal 12.

Referring to FIGs. 12 and 15 again, illustratively, the plurality of perforations 121 on the first post terminal 12 are spaced apart in a direction (for example, the third direction Y shown in FIG. 15) that is different from the length direction of the perforations 121 (for example, the second direction X shown in FIG. 15). That is, the plurality of perforations 121 on the first post terminal 12 are spaced apart in a direction intersecting the length direction of the perforations 121 at an included angle, such that the plurality of perforations 121 can be spaced apart in the direction intersecting the length direction of the perforations 121, thereby reducing the space in the first post terminal 12 occupied by the plurality of perforations 121 in the length direction of the perforations 121, which is conducive to reducing the size of the first post terminal 12 in the length direction of the perforations 121, and facilitating the miniaturization design of the first post terminal 12. For example, the plurality of perforations 121 may be spaced apart in the width direction of the perforations 121 (for example, the third direction Y shown in FIG. 15), such that the space in the first post terminal 12 occupied by the perforations 121 can be better reduced, which is more conducive to the miniaturization design of the first post terminal 12.

Referring to FIG. 15 again, illustratively, the length L1 of the perforation 121 is greater than or equal to 1.1 times the length a of the part of the connecting part 222 located in the perforation 121, and is less than or equal to the sum of the length a of the part of the connecting part 222 located in the perforation 121 and 22 mm, i.e., 1.1a ≤ L1 ≤ a+22 mm. Therefore, the width L2 of the perforation 121 is not too small, such that the conductive part 22 can pass through the perforation 121 smoothly, and the width L2 of the perforation 121 is not too large, such that the gap between the conductive part 22 and the perforation 121 is small after the two are fitted, which is conducive to sealing, and improving the structural strength of the first post terminal 12, or in other words, reducing the size and the cost of the first post terminal 12 with the same structural strength.

Specifically, both the length a and the length L1 described above can be measured by sectioning a sample to obtain a cross-section and then performing dimension measurement by using a two-dimensional projection measuring instrument or computed tomography (CT) scanning.

Experiments prove that when the length a is 20 mm and the length L1 is 1.09a, i.e., 21.8 mm, the manufacturing misalignment tolerance of the connecting part 222 is 4 mm, which poses a risk of interference with the edge of the perforation 121 during penetration, and when the length a is 20 mm and the length L1 is a+23 mm, i.e., 43 mm, the size of the first post terminal 12 needs to be increased, resulting in higher material costs and reduced structural strength of the first post terminal 12. When the length a is 20 mm and the length L1 is about 33.8 mm, the assembly with the perforation 121 is facilitated, and the size of the first post terminal 12 can be reduced, such that the material costs can be reduced and the structural strength of the first post terminal 12 can be improved.

Referring to FIG. 15 again in combination with FIG. 16, FIG. 16 is a partial cross-sectional view of the battery cell 10 according to some embodiments of the present application. Illustratively, the width L2 of the perforation 121 is greater than or equal to 1.1 times the total thickness b of all the connecting parts 222 located in the perforation 121, and is less than or equal to the sum of the total thickness b of all the connecting parts 222 located in the perforation 121 and 7 mm, i.e., 1.1b ≤ L2 ≤ b+7 mm. Therefore, the width L2 of the perforation 121 is not too small, such that the conductive part 22 can pass through the perforation 121 smoothly, and the width L2 of the perforation 121 is not too large, such that the gap between the conductive part 22 and the perforation 121 is small after the two are fitted, which facilitates sealing, and is conducive to improving the structural strength of the first post terminal 12, or in other words, reducing the size and the cost of the first post terminal 12 with the same structural strength.

Specifically, both the length b and the length L2 described above can be measured by sectioning a sample to obtain a cross-section and then performing dimension measurement by using a two-dimensional projection measuring instrument or computed tomography (CT) scanning.

Experiments prove that when the length b is 0.6 mm and the length L2 is 1.09b, i.e., 0.654 mm, the position tolerance of the connecting part 222 and the position tolerance of the perforation 121 are greater than 0.2 mm, which poses a risk of interference with the edge of the perforation 121 during penetration, and when the length b is 0.6 mm and the length L2 is b+7.1 mm, i.e., 7.7 mm, the size of the first post terminal 12 needs to be increased, resulting in higher material costs and reduced structural strength of the first post terminal 12. When the length b is 0.6 mm and the length L2 is about 3 mm, the assembly with the perforation 121 is facilitated, and the size of the first post terminal 12 can be reduced, such that the material costs can be reduced and the structural strength of the first post terminal 12 can be improved.

Referring to FIG. 8 again, in some embodiments of the present application, the first post terminal 12 is provided with an accommodating groove 124 that is in communication with the perforation 121, and a part of the conductive part 22 passes through the perforation 121 and is received in the accommodating groove 124. It can be understood that the accommodating groove 124 is a groove body, and the groove body is a groove-shaped structure of a certain depth. In the above technical solution, since the first post terminal 12 is provided with the accommodating groove 124, the weight of the first post terminal 12 can be reduced, which is conducive to increasing the gravimetric energy density of the battery cell 10. In addition, the conductive part 22 is partially received in the accommodating groove 124, such that the space occupied in the housing 11 can be reduced, which is conducive to increasing the volume of the active substance-coated part 21, and increasing the volumetric energy density of the battery cell 10.

Referring to FIG. 8 again, illustratively, the first post terminal 12 includes an end wall 122 and a side wall 123, the end wall 122 is located on a side of the side wall 123 proximal to the inside of the housing 11, the end wall 122 and the side wall 123 define the accommodating groove 124 in an enclosing manner, and an opening 1241 of the accommodating groove 124 is open to a side distal to the inside of the housing 11, that is, a surface on a side of the first post terminal 12 distal to the inside of the housing 11 is a post terminal outer end surface 125. The opening 1241 of the accommodating groove 124 penetrates through the post terminal outer end surface 125. The plurality of perforations 121 are all formed in the end wall 122, such that the accommodating groove 124 is in communication with the inside of the housing 11, and an outer end part 224 of the conductive part 22 extends into the accommodating groove 124 through the perforation 121 and is connected to the end wall 122.

For example, when the first post terminal 12 is provided on the top wall of the housing 11, the post terminal outer end surface 125 is an upper surface of the first post terminal 12, and the accommodating groove 124 is formed as a groove with the opening 1241 open upward and a wall recessed downward (that is, recessed toward a square proximal to the battery cell assembly 2). As another example, when the first post terminal 12 is provided on the bottom wall of the housing 11, the post terminal outer end surface 125 is a lower surface of the first post terminal 12, and the accommodating groove 124 is formed as a groove with the opening 1241 open downward and a wall recessed upward (that is, recessed toward a square proximal to the battery cell assembly 2).

In the above technical solution, the accommodating groove 124 is open to a side of the first post terminal 12 facing away from the inside of the housing 11, which is conducive to welding the conductive part 22 and the end wall 122 through the accommodating groove 124 from the outer side of the first post terminal 12, i.e., a side of the first post terminal 12 distal to the active substance-coated part 21. That is, the first post terminal 12 and the conductive part 22 can be welded externally through the accommodating groove 124, which facilitates processing and manufacturing of the battery cell 10, and reduces the costs of processing and manufacturing.

Illustratively, the accommodating groove 124 may be configured into a shape in which the length of the cross-section is greater than the width, such as a rectangle, an ellipse, a track shape, etc. The weld mark formed by welding the conductive part 22 and the first post terminal 12 may be an elongated weld mark parallel to the length direction of the accommodating groove 124 to improve the welding reliability and enhance the current passage performance.

Referring to FIG. 8 again, in some optional embodiments of the present application, the outer end parts 224 of the plurality of conductive parts 22 connected to the end wall 122 are stacked and connected on the end wall 122. That is, the plurality of conductive parts 22 on the end wall 122 are stacked and connected together to jointly form an electrical connection to the first post terminal 12. In this way, the outer end parts 224 of the plurality of conductive parts 22 are stacked on the end wall 122, such that the space occupied in the end wall 122 can be reduced, which is conducive to the miniaturization design of the first post terminal 12.

Referring to FIG. 16 again, in other optional embodiments of the present application, the outer end parts 224 of the plurality of conductive parts 22 connected to the end wall 122 are spaced apart on the end wall 122. That is, the plurality of conductive parts 22 on the end wall 122 are not stacked, and are connected to the end wall 122 individually to form an electrical connection to the first post terminal 12. In this way, each conductive part 22 is individually connected to the end wall 122, which is conducive to improving the reliability of the electrical connection between each conductive part 22 and the first post terminal 12.

Referring to FIG. 8 again, the housing assembly 1 further includes a post terminal cover plate 13, the post terminal cover plate 13 is fitted to the first post terminal 12 and closes the opening 1241, and the post terminal cover plate 13 is electrically connected to the first post terminal 12. In the above technical solution, arranging the post terminal cover plate 13 to close the opening 1241 of the accommodating groove 124 can prevent the leakage of the electrolytic solution in the housing 11 through the opening 1241 of the accommodating groove 124. In addition, since the post terminal cover plate 13 closes the opening 1241 of the accommodating groove 124 and is electrically connected to the first post terminal 12, the post terminal cover plate 13 may be used to easily achieve an indirect electrical connection between the first post terminal 12 and a busbar component and is conducive to increasing the connection area at the electrical connection, thereby helping reduce the resistance of the electrical connection.

It is worth noting that the fitting manner and fitting position of the post terminal cover plate 13 and the first post terminal 12 are not limited, as long as the post terminal cover plate 13 can close the opening 1241 of the accommodating groove 124. For example, during processing, the conductive part 22 may first pass through the perforation 121 and be welded to the end wall 122 of the accommodating groove 124, and then the post terminal cover plate 13 is welded to the first post terminal 12 to close the opening 1241 of the accommodating groove 124. It should be further noted that the specific structure of the post terminal cover plate 13 is not limited, and may be, for example, an integrated structure or a composite structure.

Referring to FIGs. 3-8 and 11-15 again, the battery cell 10 according to specific embodiments of the present application is described.

The battery cell 10 includes a housing assembly 1 and a battery cell assembly 2. The housing assembly 1 includes a housing 11, the housing 11 is provided with a positive electrode post terminal and a negative electrode post terminal, and both the positive electrode post terminal and the negative electrode post terminal are first post terminals 12. The battery cell assembly 2 is received in the housing 11 and includes a plurality of electrode assemblies 20, and each electrode assembly 20 includes an active substance-coated part 21 and a conductive part 22. The conductive part 22 includes a gathering part 221 and a connecting part 222, the gathering part 221 is formed by gathering a plurality of tab plates 220, the connecting part 222 is formed by gathering and connecting the plurality of tab plates 220, and the gathering part 221 connects the connecting part 222 and the active substance-coated part 21. The connecting part 222 is welded to the first post terminal 12 to be electrically connected to the first post terminal 12, and a connection position of the gathering part 221 and the connecting part 222 is a connection base part 223. A perforation 121 is formed on the first post terminal 12 corresponding to a position of the connection base part 223 of each conductive part 22 of each electrode assembly 20, separately, and the conductive part 22 is provided in the perforation 121 corresponding to the connection base part 223 in a penetrating manner, such that one conductive part 22 is provided in each perforation 121 in a penetrating manner, separately.

Further, the first post terminal 12 includes an end wall 122 and a side wall 123, the end wall 122 is located on a side of the side wall 123 proximal to the inside of the housing 11, the end wall 122 and the side wall 123 define an accommodating groove 124 in an enclosing manner, and an opening 1241 of the accommodating groove 124 is open to a side distal to the inside of the housing 11. A plurality of perforations 121 are all formed in the end wall 122, such that the accommodating groove 124 is in communication with the inside of the housing 11, each perforation 121 is an elongated hole, and the plurality of perforations 121 on the end wall 122 are spaced apart in the width direction of the perforations 121. The conductive part 22 includes a connecting part 222 provided in the perforation 121 in a penetrating manner, the length direction of a part of the connecting part 222 located in the perforation 121 is consistent with the length direction of the perforation 121, and the width direction of the perforation 121 is arranged in the thickness direction of the connecting part 222. The connecting part 222 extends into the accommodating groove 124 through the perforation 121 and is welded to the end wall 122, and a plurality of connecting parts 222 welded to the end wall 122 are stacked and welded together on the end wall 122. A post terminal cover plate 13 is welded to the opening 1241, and the post terminal cover plate 13 closes the opening 1241 and is electrically connected to the first post terminal 12.

In the above technical solution, each first post terminal 12 in the battery cell 10 is provided with a plurality of conductive parts 22 in a penetrating manner and connected thereto, and each conductive part 22 includes a plurality of tab plates 220 that are stacked and connected in a gathering manner, such that the number of tab plates 220 included in each conductive part 22 can be reduced, and the gathering height of the plurality of tab plates 220 in each conductive part 22 can be reduced, thereby reducing the occupied size of each conductive part 22 in the housing 11 in an tab extension direction. When the size of the housing 11 is fixed, the space that can be occupied by the active substance-coated part 21 in the tab extension direction can be increased, which is conducive to increasing the energy density of the battery cell 10.

According to some embodiments of the present application, the present application further provides a battery 100. The battery 100 includes the battery cell 10 according to any one of the above embodiments. In the above technical solution, the battery 100 is provided with the above battery cell 10 and the energy density of the battery cell 10 can be increased, which is therefore conducive to increasing the energy density of the battery 100.

According to some embodiments of the present application, the present application further provides an electric device 1000. The electric device 1000 includes the battery 100 according to the above embodiments, and the battery 100 is configured to provide electric energy for the electric device 1000. In the above technical solution, the electric device 1000 is provided with the above battery 100 and the energy density of the battery 100 can be increased, which is therefore conducive to prolonging the usage duration of the electric device 1000. It will be appreciated that, when the electric device 1000 is a vehicle, the usage duration of the battery 100 being prolonged is conducive to improving the vehicle's driving range.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the principle of the present application shall all fall within the scope of the present application.

## Claims

1. A battery cell, comprising:
a housing assembly comprising a housing and a first post terminal disposed on the housing; and
a battery cell assembly received in the housing and comprising conductive parts electrically connected to the first post terminal, wherein each of the conductive parts comprises a plurality of tab plates that are stacked and connected in a gathering manner, and
the first post terminal is electrically connected to a plurality of conductive parts, a plurality of perforations are formed on the first post terminal, and at least one of the conductive parts is provided in each of the perforations in a penetrating manner, separately.

2. The battery cell according to claim 1, wherein the battery cell assembly comprises at least one electrode assembly, each of the at least one electrode assembly comprises the conductive parts, and the perforation is formed on the first post terminal corresponding to a position of each of the at least one electrode assembly, separately.

3. The battery cell according to claim 2, wherein the electrode assembly comprises an active substance-coated part, the conductive part comprises a gathering part and a connecting part, the gathering part is formed by gathering the plurality of tab plates, the connecting part is formed by gathering and connecting the plurality of tab plates and is configured to be electrically connected to the first post terminal, the gathering part connects the connecting part and the active substance-coated part, and a connection position of the gathering part and the connecting part is a connection base part; and the perforation is formed on the first post terminal corresponding to a position of at least one connection base part in each electrode assembly.

4. The battery cell according to claim 2 or 3, wherein the perforation is formed on the first post terminal corresponding to a middle region in a thickness direction of each electrode assembly, separately.

5. The battery cell according to any one of claims 2 to 4, wherein the electrode assembly comprises the active substance-coated part, the conductive part comprises a gathering part and a connecting part, the gathering part is formed by gathering the plurality of tab plates, the connecting part is formed by gathering and connecting the plurality of tab plates and is configured to be electrically connected to the first post terminal, the gathering part connects the connecting part and the active substance-coated part, and a connection position of the gathering part and the connecting part is a connection base part; and at least one connection base part in the electrode assembly corresponds to the middle region in the thickness direction of the electrode assembly.

6. The battery cell according to any one of claims 2 to 5, wherein the battery cell assembly comprises at least one combination, each of the at least one combination comprises two electrode assemblies, each of the electrode assemblies in each of the at least one combination comprises a plurality of conductive parts of the same polarity, separately, and at least two adjacently arranged conductive parts of the same polarity belonging to different electrode assemblies in each of the at least one combination are connected to each other.

7. The battery cell according to any one of claims 1 to 6, wherein the battery cell assembly comprises at least one electrode assembly, each of the at least one electrode assembly comprises at least one conductive part, the electrode assembly comprises an active substance-coated part, the conductive part comprises a gathering part and a connecting part, the gathering part is formed by gathering the plurality of tab plates, the connecting part is formed by gathering and connecting the plurality of tab plates and is configured to be electrically connected to the first post terminal, the gathering part connects the connecting part and the active substance-coated part, a connection position of the gathering part and the connecting part is a connection base part, and the conductive part is provided in the perforation closest to a corresponding connection base part in a penetrating manner.

8. The battery cell according to any one of claims 3, 5, and 7, wherein the perforation is formed on the first post terminal corresponding to a position of the connection base part of each conductive part, separately.

9. The battery cell according to any one of claims 1 to 8, wherein the perforation is an elongated hole, the conductive part comprises a connecting part provided in the perforation in a penetrating manner, the connecting part is sheet-shaped, a length direction of a part of the connecting part located in the perforation is consistent with a length direction of the perforation, and a width direction of the perforation is consistent with a thickness direction of the connecting part.

10. The battery cell according to claim 9, wherein the plurality of perforations on the first post terminal are spaced apart in a direction that is different from the length direction of the perforations.

11. The battery cell according to any one of claims 1 to 10, wherein the conductive part is formed by the plurality of tab plates, and the tab plates are welded to the first post terminal; or the conductive part further comprises an adapting piece, and the tab plates are connected to the first post terminal through the adapting piece.

12. The battery cell according to any one of claims 1 to 11, wherein the first post terminal is provided with an accommodating groove that is in communication with the perforation, and a part of the conductive part passes through the perforation and is received in the accommodating groove.

13. The battery cell according to claim 12, wherein the first post terminal comprises an end wall and a side wall, the end wall is located on a side of the side wall proximal to the inside of the housing, the end wall and the side wall define the accommodating groove in an enclosing manner, an opening of the accommodating groove is open to a side distal to the inside of the housing, the plurality of perforations are all formed in the end wall, such that the accommodating groove is in communication with the inside of the housing, and an outer end part of the conductive part extends into the accommodating groove through the perforation and is connected to the end wall.

14. The battery cell according to claim 13, wherein the outer end parts of the plurality of conductive parts connected to the end wall are stacked and connected on the end wall; or the outer end parts of the plurality of conductive parts connected to the end wall are spaced apart on the end wall.

15. The battery cell according to claim 13 or 14, wherein the housing assembly further comprises a post terminal cover plate, the post terminal cover plate is fitted to the first post terminal and closes the opening, and the post terminal cover plate is electrically connected to the first post terminal.

16. The battery cell according to any one of claims 1 to 15, wherein the housing is provided with a plurality of post terminals, and at least one of the plurality of post terminals is the first post terminal.

17. A battery, comprising the battery cell according to any one of claims 1 to 16.

18. An electric device, comprising the battery according to claim 17.
